# EUROPÄISCHE PATENTANMELDUNG

(11) **EP 1 882 858 A2**
(43) Veröffentlichungstag der Anmeldung: **30.01.2008**
(21) Anmeldenummer: 07013021.6
(22) Anmeldetag: 03.07.2007
(51) Int. Cl.: F04D 29/02, F04D 29/32, F04D 29/38

(54) **Verfahren zur Verbesserung der Eigenschaftten eines Lüftterrades aus Kunststoff und Lüfterrad**

(30) Priorität: 27.07.2006 DE 102006035550; 11.08.2006 DE 102006037933
(71) Anmelder: Behr GmbH & Co. KG, 70469 Stuttgart (DE)
(72) Erfinder: Kämmler, Georg, 70439 Stuttgart (DE)

(57) **Zusammenfassung**

Die Erfindung betrifft einerseits ein Verfahren zur Verbesserung der Festigkeitseigenschaften eines Kunststofflüfters und andererseits ein Lüfterrad, welches nach diesem Verfahren hergestellt ist.

Es wird vorgeschlagen, dass das Lüfterrad - nach seiner Formgebung - einer Elektronenbestrahlung unterzogen wird mit der Folge, dass sich eine strahlenvernetzte Struktur ausbildet. Die strahlenvemetzten Lüfterräder werden vorzugsweise für Kühlgebläse von Kraftfahrzeugen eingesetzt.

## Beschreibung

Die Erfindung betrifft ein Verfahren zur Verbesserung der mechanischen und chemischen Eigenschaften eines aus Kunststoff herstellbaren Lüfterrades nach dem Oberbegriff des Patentanspruches 1 sowie ein Lüfterrad nach dem Oberbegriff des Patentanspruches 3.

Lüfterräder sind bekannt als Komponente einer Kühlanlage, insbesondere bei Kraftfahrzeugen. Derartige Lüfter werden von einem Elektromotor oder von der Brennkraftmaschine des Kraftfahrzeuges angetrieben und fördern Kühlluft durch einen Kühlmittelkühler, in welchem ein Kühlmittel eines Kühlmittelkreislaufes für die Brennkraftmaschine abgekühlt wird. Die Lüfterräder werden heutzutage aus Kunststoff hergestellt, d. h. als Kunststoffspritzteil, wobei der Kunststoff zur Erhöhung der Festigkeit glasfaserverstärkt ist. Durch den Glasfaseranteil erhöht sich nicht nur die Festigkeit, z. B. die Zugfestigkeit bei Fliehkraftbeanspruchung, sondern auch das Gewicht des Lüfters, was insbesondere bei Kraftfahrzeugen nachteilig ist. Im Rahmen der Entwicklung von Motoren mit höherer Leistung erhöhen sich auch die Anforderungen an eine Kühlanlage, wobei das Gewicht möglichst nicht zunehmen soll. Höhere Lüfterleistungen können durch eine erhöhte Drehzahl erreicht werden, welche jedoch höhere Zentrifugalkräfte und damit eine höhere mechanische Beanspruchung des Lüfters, insbesondere der Lüfterblätter zur Folge hat. Eine weitere Verstärkung durch Erhöhung des Glasfaseranteiles im Kunststoff würde jedoch auch - wie oben erwähnt - zu einem höheren Gewicht führen.

Lüfterräder von Axial- oder Radialgebläsen für Kraftfahrzeuge wurden durch die DE 33 04 297 C2 und die DE 44 38 184 C1 der Anmelderin sowie durch die DE 41 17 336 A1 der Anmelderin als Mitanmelderin bekannt.

Es ist Aufgabe der vorliegenden Erfindung, die Festigkeit von Lüfterrädern aus Kunststoff, möglichst ohne Gewichtszunahme zu erhöhen, sodass sie Beanspruchungen, resultierend aus höheren Drehzahlen, standhalten. Insbesondere ist es Aufgabe der Erfindung, hierfür ein geeignetes Verfahren bereitzustellen.

Die Aufgabe der Erfindung wird zunächst durch ein Verfahren mit den Merkmalen des Patentanspruches 1 gelöst. Erfindungsgemäß ist vorgesehen, dass das fertige Lüfterrad, welches vorzugsweise als Kunststoffspritzteil, insbesondere aus einem Polyamid herstellbar ist, einer Elektronenbestrahlung (Betastrahlung) unterzogen wird. Der Vorteil, der mit dieser Bestrahlung durch beschleunigte Elektronen verbunden ist, ist eine Vernetzung des Kunststoffes, eine so genannte Strahlenvernetzung. Diese hat eine Erhöhung der mechanischen Festigkeit, unter anderem des E-Modules, der Zugfestigkeit und der Wechselbiegefestigkeit sowie eine Verbesserung der Chemikalienbeständigkeit zur Folge. Vorteilhaft ist ferner die Verminderung der Kriechneigung des Kunststoffes unter Belastung. Es kann auch auf einen erhöhten Glasfaseranteil verzichtet werden, wodurch sich eine Gewichtseinsparung ergibt. Das Gewicht des Lüfterrades wird durch diese Elektronenbestrahlung nicht erhöht, Ein weiterer Vorteil ergibt sich aufgrund des Spritzverfahrens für den Lüfter: Den Lüfterschaufeln sind jeweils eigene Spritzkanäle (Stränge) zugeordnet, welche spinnenartig von innen nach außen verlaufen und den Schaufeln die Kunststoffschmelze zuführen. Aufgrund dieser mehrfachen, parallel ablaufenden Fließvorgänge bilden sich im Nabenbereich jeweils zwischen den Schaufeln Nähte aus, wo zwei Fließfronten aufeinander treffen. Diese Nähte stellen eine Inhomogenität in der Kunststoffstruktur und damit eine Schwachstelle dar, insbesondere in einem Bereich, wo starke Beanspruchungen auftreten. Durch die erfindungsgemäße Strahlenvernetzung werden diese Schwachstellen beseitigt.

Die Strahlenvernetzung von Kunststoffen, insbesondere von Polyamiden ist an sich, d. h. für andere Bauteile wie z. B. Schläuche und Kunststoffkomponenten von elektrischen Schaltungen bekannt, z. B. durch druckschriftliche Veröffentlichungen des Lehrstuhls für Kunststofftechnik an der Universität Erlarigen-Nürnberg und der Autoren Zaneta Brocka, Colette Bürger und Gottfried W. Ehrenstein unter dem Titel: "Elektronenstrahlvernetzte Kunststoffe - Eigenschaften und Anwendungen", veröffentlicht am 18.11.2004 in Kehlheim. Das Verfahren zur Strahlenvernetzung von Kunststoffen wird auch als Dienstleistung von Firmen wie PTS (Plastic Technologie Service) in D-91587 Adelshofen oder BGS Beta-Gamma-Service angeboten und durchgeführt.

Vorteilhaft ist es, wenn dem Kunststoff, beispielsweise dem Kunststoffgranulat vor dem Spritzvorgang ein Additiv, d. h. ein so genannter Vernetzungsverstärker beigegeben wird, welcher die Vernetzung der Molekularstruktur bei der Elektronenbestrahlung fördert bzw. möglich macht. Bei Verwendung von Polyamiden, beispielsweise PA6 oder PA66 ist ein Vernetzungsverstärker, der unter der Marke BETALINK von der Firma BGS angeboten wird, vorteilhaft. Es werden etwa 4 % Vernetzungsmittel zugegeben, damit das Polyamid strahlenvernetzbar wird. Die Elektronenbestrahlung erfolgt vorzugsweise mit einer Dosis von ca. 100 kGy.

Die Aufgabe der Erfindung wird auch durch ein Lüfterrad mit den Merkmalen des Patentanspruches 3 gelöst, wobei das Lüfterrad aus Kunststoff, insbesondere aus einem Polyamid, vorzugsweise PA6 oder PA66 hergestellt ist. Polyamid eignet sich für die Strahlenvernetzung besonders gut und ist gleichzeitig der bisher verwendete Werkstoff für Lüfter. Der Lüfter wird als fertiges Kunststoffspritzteil, also nach seiner Formgebung einer Betastrahlung mit einer hinreichenden Dosis ausgesetzt und erhält somit eine Strahlenvernetzung, verbunden mit einer Erhöhung der Festigkeit und verringerter Kriechneigung. Wie oben erwähnt, ist es von Vorteil, dem Kunststoffgranulat vor dem Spritzvorgang einen Vernetzungsverstärker beizugeben.

Die erfindungsgemäße Strahlenvernetzung wird vorteilhaft für Lüfterräder mit Axial- oder Radialbeschaufelung eingesetzt, wobei Axiallüfter vorteilhaft auch als Mantellüfter ausgebildet sind. Wie oben erwähnt, weisen Lüfterräder, insbesondere mit Axialbeschaufelung - bedingt durch die Mehrfacheinspritzung des Kunststoffes in die Kunststoffform - im Nabenbereich Inhomogenitäten der Kunststoffstruktur auf, welche bei Belastung des Lüfters Bereiche mit geringerer Festigkeit, d. h. Schwachstellen darstellen. Durch die nach dem Spritzvorgang durchgeführte Strahlenvernetzung wird der Kunststoff auch im Bereich dieser Schwachstellen derart vernetzt, dass sich eine Erhöhung der Festigkeit in diesen Bereichen ergibt. Durch die Reduzierung der Kriechneigung und der Feuchtigkeitsaufnahme des strahlenvernetzten Kunststoffes wird darüber hinaus der Vorteil erreicht, dass Unwuchten weniger stark auftreten, sodass der Lüfter ruhiger läuft.

Infolge der erfindungsgemäßen Festigkeitssteigerung der Lüfterräder ohne eine Gewichtszunahme ist die Erfindung insbesondere bei Kühlanlagen für Kraftfahrzeuge vorteilhaft einsetzbar.

Ausführungsbeispiele der Erfindung sind in der Zeichnung dargestellt und werden im Folgenden näher beschrieben. Es zeigen
- Fig. 1: einen Mantellüfter eines Kühlgebläses für ein Kraftfahrzeug und
- Fig. 2: einen Axiallüfter, ebenfalls für ein Kühlgebläse eines Kraftfahrzeuges.

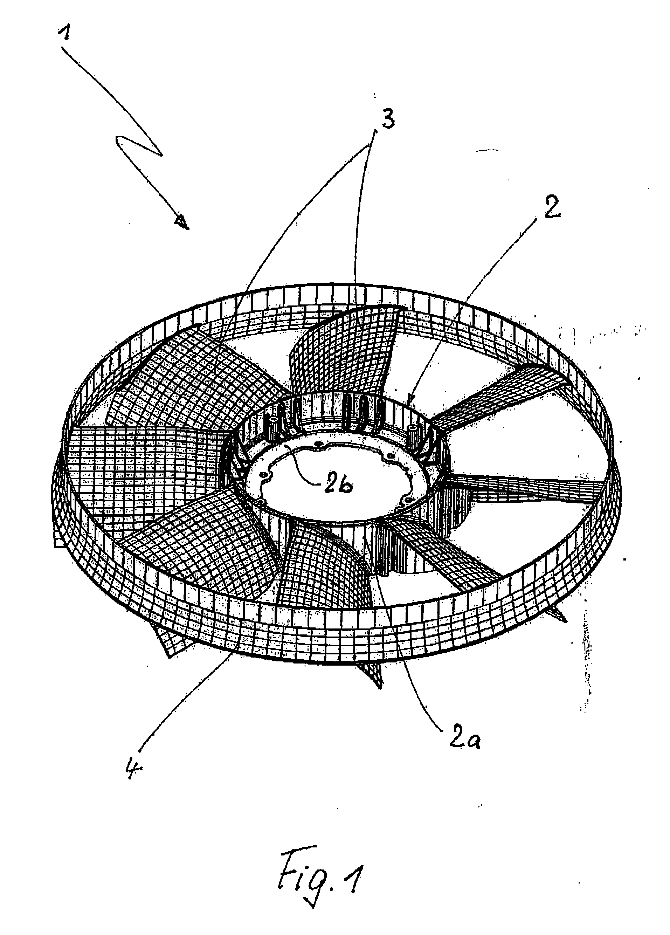

Fig. 1 zeigt einen so genannten Mantellüfter 1 für ein nicht dargestelltes Kühlgebläse für ein Kraftfahrzeug. Der Mantellüfter 1 besteht aus einer Nabe 2, aus einer Reihe von an der Nabe 2 befestigten Axialschaufeln 3 sowie einem Mantel 4, welcher an den Schaufelspitzen der Axialschaufeln 3 befestigt ist. Die Nabe 2 weist einen etwa zylindrischen Teil 2a auf, an welchen die Schaufelwurzeln der Axialschaufeln 3 befestigt sind, sowie einen stirnseitigen Flansch 2b, welcher zur Befestigung an einem nicht dargestellten Antriebselement, z. B, einer Flüssigkeitsreibungskupplung dient, welche von der nicht dargestellten Brennkraftmaschine des Kraftfahrzeuges angetrieben wird. Möglich ist auch ein direkter Antrieb über die Kurbelwelle der Brennkraftmaschine oder über einen nicht dargestellten Elektromotor. Der Mantellüfter, bestehend aus Nabe 2, Axialschaufeln 3 und Mantel 4, ist als einstückiges Kunststoffspritzteil herstellbar, wobei als Kunststoff vorzugsweise ein Polyamid, z. B. PA6 oder PA66 verwendet wird. Bekanntlich wird der Kunststoff als Rohmaterial in Form eines Granulats einer Kunststoffspritzmaschine zugeführt, wobei dem Polyamid erfindungsgemäß ein Vernetzungsverstärker, z. B. im Handel erhältlich unter der Markenbezeichnung *Betalink* begebenen wird. Nachdem der Mantellüfter 1 abgespritzt ist, d. h. als Kunststoffspritzteil vorliegt, wird er erfindungsgemäß einer Elektronenbestrahlung unterzogen. Dies erfolgt in einer entsprechenden Anlage mit einem Elektronenbeschleuniger bei Raumtemperatur. Durch die Elektronenbestrahlung des Mantellüfters 1 wird die Molekularstruktur des Kunststoffes verändert: es ergibt sich eine so genannte Strahlenvernetzung, welche die bekannten Vorteile aufweist, u. a. Erhöhung der mechanischen Festigkeit, Verminderung der Kriechneigung und Erhöhung der Beständigkeit gegen Chemikalien.

Ein Axiallüfter der oben beschriebenen Art wird durch Mehrfacheinspritzung der Kunststoffschmelze hergestellt, wobei pro Axialschaufel ein Einspritzkanal (Strang) vorgesehen ist. Beim Spritzvorgang laufen also mehrere Einspritzvorgänge parallel und synchron zueinander ab, was zur Folge hat, dass die sich ausbreitenden Fronten der Kunststoffschmelze im Nabenbereich aufeinander treffen und dort eine Naht oder Fuge bilden. Die Vernetzung des Kunststoffes ist in diesem Bereich (nach dem Spritzvorgang) schwächer ausgebildet, sodass die Festigkeit des Kunststoffes in diesen Bereichen geringer ist. Aufgrund der erfindungsgemäßen Nachbehandlung durch Elektronenbestrahlung wird eine Strahlenvernetzung des Kunststoffes im Bereich der Nähte erreicht, was eine Festigungssteigerung zur Folge hat. Infolge der verringerten Kriechneigung des strahlenvernetzten Kunststoffes ist der Lüfter formstabiler, d. h. es treten weniger Unwuchten beim Betrieb des Lüfters auf, strahlenvernetzte Lüfter laufen somit ruhiger.

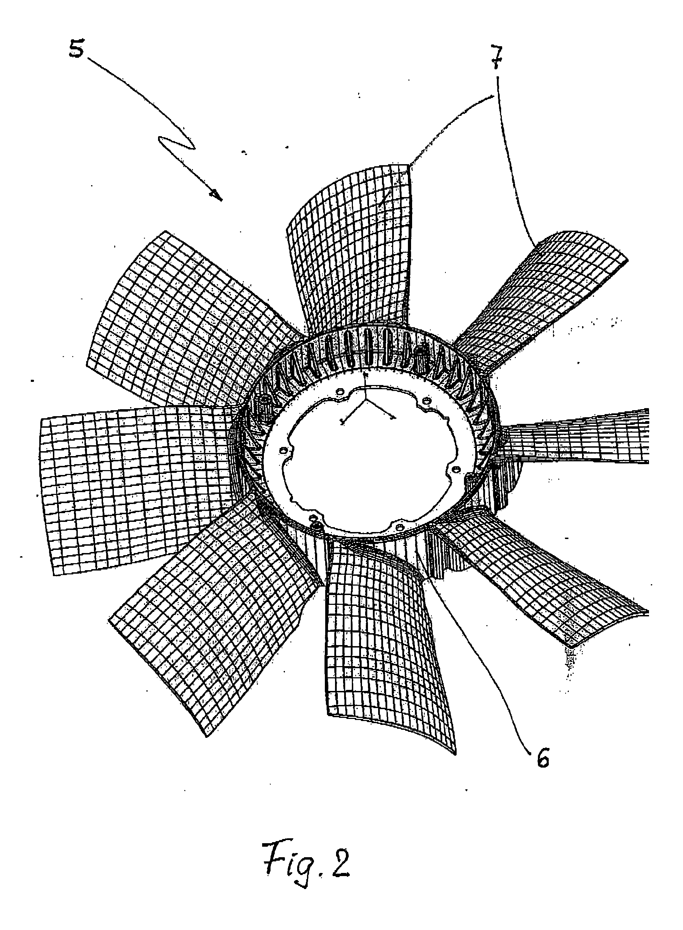

Fig. 2 zeigt ein weiteres Ausführungsbeispiel für ein Lüfterrad 5, welches als reiner Axiallüfter, d. h. ohne Mantel ausgebildet ist. Es entspricht im Übrigen dem Mantellüfter gemäß Fig. 1, wobei an einer etwa zylindrischen Nabe 6 radial abragende Axialschaufeln 7 befestigt sind. Auch der Axiallüfter 5 ist als Kunststoffspritzteil, vorzugsweise aus einem Polyamid herstellbar und wird erfindungsgemäß einer Elektronenbestrahlung zur Erzielung einer Strahlenvernetzung des Polyamides unterzogen.

Abweichend von den dargestellten Axiallüftern, sind auch andere Bauformen von Lüfterrädern, z. B. als Radiallüfter, Halbaxial- oder Halbradiallüfter möglich. Im Rahmen der Erfindung sind auch solche Lüfterräder zu sehen, welche nicht als einstückiges Kunststoffspritzteil, sondern aus mehreren miteinander verschweißten Teilen hergestellt sind. Denkbar sind beispielsweise, insbesondere für größere Lüfter, Segmentbauweisen, wobei die Segmente einzeln abgespritzt und anschließend verschweißt werden, z. B. durch Vibrationsschweißen. Eine anschließende Elektronenbestrahlung führt neben der Strahlenvemetzung des Grundmaterials auch zu einer Strahlenvernetzung der Schweißnähte mit den gleichen Vorteilen, wie sie oben erwähnt wurden.

## Patentansprüche

1. Verfahren zur Verbesserung der mechanischen und chemischen Eigenschaften eines aus Kunststoff herstellbaren Lüfterrades (1, 5), **dadurch gekennzeichnet, dass** das Lüfterrad - nach seiner Formgebung - einer Elektronenbestrahlung unterzogen wird.

2. Verfahren nach Anspruch 1, **dadurch gekennzeichnet, dass** dem Kunststoff - vor seiner Formgebung - ein Additiv zur Verstärkung einer Vernetzung des Kunststoffes zugegeben wird.

3. Lüfterrad, bestehend aus einer Nabe (2, 6) und einer Beschaufelung (3, 7), ausgebildet als Kunststoffspritzteil, herstellbar nach dem Verfahren gemäß Anspruch 1 oder 2, **dadurch gekennzeichnet, dass** der Kunststoff ein Polyamid, vorzugsweise PA6 oder PA66 ist.

4. Lüfterrad nach Anspruch 3, **dadurch gekennzeichnet, dass** dem Polyamid ein Vernetzungsverstärker beigegeben ist.

5. Lüfterrad nach Anspruch 3 oder 4, **dadurch gekennzeichnet, dass** die Beschaufelung eine Vielzahl von an der Nabe (2, 6) angespritzten Axialschaufeln (3, 7) aufweist.

6. Lüfterrad nach Anspruch 5, **dadurch gekennzeichnet, dass** die Axialschaufeln (3) mit einem Mantelring (4) verbunden sind.

7. Lüfterrad, bestehend aus einer Nabe (2, 2a, 2b; 6) und einer Vielzahl von Schaufeln, insbesondere Axialschaufeln (3, 7), ausgebildet als Kunststoffspritzteil, **gekennzeichnet durch** einen strahlenvernetzten Kunststoff, insbesondere ein strahlenvernetztes Polyamid.

8. Lüfterrad nach einem der Ansprüche 3 bis 7, **dadurch gekennzeichnet, dass** es zur Förderung von Kühlluft für eine Kühlanlage eines Verbrennungsmotors eines Kraftfahrzeuges ausgelegt und/oder betreibbar ist.
